# EUROPEAN PATENT APPLICATION

(11) **EP 3 269 641 A1**
(43) Date of publication of application: **17.01.2018**
(21) Application number: 16179546.3
(22) Date of filing: 14.07.2016
(51) Int. Cl.: B64C 39/02

(54) **UNMANNED AERIAL OR MARINE VEHICLE**

(71) Applicant: Trampaboards Ltd, Wilford, Nottinghamshire NG11 7EP (GB)
(72) Inventor: Drenckhahn, Frank, 10437 Berlin (DE)
(74) Representative: Schulz, Ben Jesko

(57) **Abstract**

The invention relates to an unmanned aerial or submarine vehicle (UV) (1) comprising at least:
- at least one, particularly not more than, particularly exactly, two propulsion modules (20, 21), each comprising means for propulsion (30) of the UV (1),
- a body (2),
- wherein the propulsion modules (20,21) are linked with the body (2) such that each of the propulsion modules (20, 21) is rotatable (101) with respect to the body (2) at least around a pitch axis (100) of the UV,
wherein the UV (1) is designed such, that during flight or underwater motion the body (2) is rotatable (101) around the pitch axis (100) independently of the orientation of the means for propulsion (30).

## Description

### Specification

The invention relates to an unmanned aerial vehicle (UAV) or an unmanned marine vehicle (ROV), particularly a remote controlled unmanned diving robot, a method for spinning around a yaw axis of the UAV or the ROV, and a method for acquiring data along a panoramic sector or projecting light, sound or radiation within a panoramic sector with an unmanned aerial or marine vehicle.

Unmanned aerial and marine vehicles become increasingly important. During such unmanned missions it is particularly important to remotely control the vehicle and to be able to freely orient an acquisition device, a measurement device or any other payload of the unmanned vehicle without any parts of the unmanned vehicle obstructing the field of view or the line of fire.

Conventional UAVs or conventional unmanned underwater vehicles such as for example ROVs - in the following summarized under the term UV (unmanned vehicle) - usually carry their payload below, above or in front of a body or fuselage that comprises means for propulsion. This arrangement however does not allow for free rotation of e.g. a camera that is comprised by a gimbal that is located below, above or in front of, but particularly on the outside of the body.

Therefore filming upwards (or downwards, if the camera sits on top of the UV) is not possible as the body of the UV obstructs the field of view of the camera.

A UAV is known from the state of the art, comprising a body with four arms with a rotor each, that can be freely oriented in three-dimensional space (RU 0002547950). The proposed layout of said quadrocopter and its associated mechanism is such that by altering the orientation of the four arms, the body can be reoriented. In order to access all possible orientations of the body, it might become necessary to flip one or more arms from pointing upwards with its rotor to pointing downwards with its rotor - shifting from a pulling mode to a pushing mode. Such a manoeuvre however comes with an increased risk of loosing control over the quadrocopter.

The drawbacks of such a design become significantly prominent when considering that a rotation of the body around the pitch axis of the quadrocopter involves two arms to be rotated alongside the body. While a rotation of these two arms is coupled with an increased moment of inertia (the two arms stick out away form the pitch axis), it is even more problematic to control the thrust and lifting force vectors of these two arms in order to keep the quadrocopter afloat, as at a very specific point during the rotation the thrust of the propellers has to be reversed. This is a highly undesirable situation that besides of being a risky manoeuvre also leads to an increased wear and tear of the components and a greatly reduced agility of the quadrocopter.

Also vertical take-off and vertical landing aircrafts (VTOL) are known from the state of the art. VTOLs, such as tiltrotors or tiltwings, are able to rotate their means for propulsion, for example the proprotors, jets or even their whole wings, around the pitch axis of the aircraft, such that the line of flight and also the flight mode is changing. The flight mode of these VTOLs changes during take-off from rotary-wing mode to fixed-wing flight mode. However, VTOLs are not designed to rotate their body/fuselage with respect to the propulsion modules (e.g. their wings with the means for propulsion attached) to arbitrary positions, because VTOLs are not designed to rotate their body/fuselage to arbitrary positions while in fixed-wing mode.

Furthermore, in certain situations high agility manoeuvres have to be executed, for example to avoid an unexpected obstacle or to scan the environment or to project light over all solid angles, such that a complete sphere (360° panoramic sector) is covered.

With conventional aircrafts this problem is not solved, as they often are not capable of fast rotations around one or more axes.

Therefore, the problem underlying the present invention is to provide an unmanned vehicle for aerial or marine use that allows for unobstructed acquisition of data along all directions, particularly around the pitch axis. Furthermore, a method for high agility rotations around a yaw axis solves the above-mentioned problems.

An UV, particularly an UAV and/or a ROV having the features of claim 1, and a method having the features of claim 13 and a method having the features of claim 16 solve this problem. Preferred embodiments are stated in the sub claims.

According to claim 1, an unmanned aerial or marine vehicle (UV), particularly an unmanned aerial vehicle (UAV) or a remotely operated vehicle (ROV), particularly an unmanned submarine vehicle, comprises at least:
- At least one, particularly not more than two, particularly exactly two propulsion modules, each comprising one or more means for propulsion of the UV,
- a body, wherein particularly a first propulsion module of the exactly two propulsion modules, the body and a second propulsion module of the exactly two propulsion modules are linked along a laterally extending axis, that is the pitch axis,
- wherein the propulsion modules are linked with the body such, each of the propulsion modules is rotatable, pivotable and/or orientable independently or dependently of each other with respect to the body at least around the pitch axis of the UV,
wherein the UV is designed such, that particularly during flight or underwater motion the body is rotatable, spinable or pivotable at least around the pitch axis independently of the orientation of the means for propulsion, particularly without affecting the position and/or orientation of the means for propulsion and/or without the need to move the means for propulsion in order to maintain their orientation.

This means that the body of the UV is orientable regarding a rotation at least around the pitch axis independently from the orientation of the means for propulsion.

Therefore the UV is particularly designed such, that particularly during flight or during a diving operation the body is rotatable, spinable or pivotable at least around the pitch axis independently of the line of flight, particularly without influencing the line of flight, particularly wherein the propulsion module's orientation or the orientation of the means for propulsion remains within a half-space that extends from a plane comprising the pitch axis and a roll axis of the UV, or wherein said plane particularly extends parallel to the horizontal ground. Thus, the orientation of the means for propulsion particularly always points inward said half-space.

If the UV is a ROV, then the line of flight corresponds to the line of motion of the ROV. In the sense of the invention, a UAV is a heavier-than-air vehicle, and an ROV is a heavier-than-water or same-weight-as-water vehicle.

The body of the UV is for example a chassis, a frame, or a framework that is designed to carry a device. In aviation the body particularly correspond to a fuselage. The propulsion module in the sense of the present invention is a component that is designed to connect the means for propulsion with the body.

Therefore the propulsion module particularly comprises a framework, like an arm, wherein particularly the means for propulsion are arranged at one end of the framework and the body is linked to the propulsion module at the other end of the framework. However the propulsion modules do not have to have a certain size or extend, but they can be designed mainly to only support the means for propulsion.

An UV according to the invention comprises particularly exactly two propulsion modules that are symmetrically linked to the body, and wherein the two propulsion modules are particularly symmetrical.

However, according to the invention, also an UV with only one propulsion module is conceivable (see for example in the figure section).

Even though it is generally referred to a plurality of propulsion modules also embodiments with only one propulsion module are meant to be included in this notion at the same time, even though it might not explicitly referred to such an embodiment as long as this leads not to contradictory statements.

A propulsion module might comprise one or more arms, but it is particularly a device that is suited for carrying the means for propulsion and to link these means for propulsion to the body, particularly along the pitch axis.

The propulsion modules according to the invention particularly are designed for providing more than 60%, more particularly more then 80%, more particularly more than 90% of the lifting force / thrust required to keep the UV in a stable, particularly horizontal position with respect to its pitch and roll axis, particularly when operating in rotary-wing mode.

Furthermore, the UV according to the invention can comprise additional ancillary propulsion modules with means for propulsion, that are not arranged rotatably along the pitch axis, but that are designed for example as propelling units only. These ancillary propulsion modules are particularly not designed to lift the UV, but serve different purposes such as for example of stabilizing the UV while air/waterborne or to propel the UV within a plane extending between the roll and pitch axis of the UV.

The body is for example arranged around one end of the propulsion module or the body is particularly designed such that the propulsion module is attached to said body.

In embodiments comprising exactly two propulsion modules, it is possible that the propulsion modules are connected to each other directly, e.g. by a joint, or that the propulsion modules are not connected directly but that the propulsion modules are connected only to the body.

These two propulsion modules are rotatable independently or dependently of each other with respect to the body.

The pitch axis is part of a coordinate system that is attached to the UV. As airplanes also a UV might rotate around one of these axes in three dimensions, wherein these axes are orthogonal to each other. Like in airplanes these axes can be defined as a roll, a yaw and a pitch axis.

The pitch axis is also referred to as lateral axis, or transverse axis.

Besides the common definitions of the pitch axis, there are several ways to define the pitch axis. That can be used for defining the orientation of the pitch axis.

Under ideal conditions, that is without any wind, currents or turbulences, and while the UV is hovering still, the yaw axis points vertically towards/away from the ground. A rotation around the yaw axis will rotate the UV either clockwise or counterclockwise (left/right turn). The roll and pitch axis extend in the plane that is orthogonal to the yaw axis, i.e. under ideal conditions, while the UV is hovering still they are parallel to the horizon. A rotation around the roll axis will lead to a sideway (left/right) drift of the UV.

The pitch axis extends orthogonally to the roll and yaw axis.

Alternatively, the orientation of the pitch axis and particularly the pitch axis itself is defined as follows for some embodiments of the invention:

In embodiments where the UV comprises exactly two propulsion modules, a first propulsion module might be attached to the body with a first joint and a second propulsion module is attached to the body with a second joint, wherein an axis extending between the first and second joint defines the pitch axis of the UV.

Yet another possible definition of the pitch axis of the UV for some embodiments is by considering the arrangement of the two propulsion modules and the body next to each other. A first propulsion module might be arranged on the left side from the body wherein a second propulsion module might be arranged on the right side from the body. The pitch axis essentially extends along this line form left to right.

Further definitions and explanations for the orientation of the pitch axis are shown in the figure descriptions.

The pitch axis is the same axis for all of the above definitions, that is all given definitions lead to the same axis. If one definition might lead to contradicting direction of the pitch axis, then the definition of the pitch axis is considered to be the correct definition that comes closest the common definitions of the pitch axis.

While the propulsion modules can be oriented independently or dependently of the respective other propulsion module around at least the pitch axis, the specific orientation of the propulsion modules with respect to each other, particularly the specific orientation of the means for propulsion of the respective propulsion module, allows for controlling a rotation of the UV around the yaw axis.

The orientation of the propulsion modules can be defined by the orientation of the means for propulsion and points particularly along the same direction. A means for propulsion can for example be a rotor, a propellers, a jet, a rocket engine or specific engines that are used for underwater propulsion.

All these exemplary means for propulsion give rise to a lifting force vector (that can also comprise a thrust vector) during operation, that points along the thrust of the means for propulsion. Oftentimes, the lifting force and the thrust vectors are pointing along the same direction.

The lifting force vector in turn can be used to define the orientation of the means for propulsion. For example, when using rotors as means for propulsion, the orientation of the means for propulsion extends particularly orthogonal to the plane defined by the rotatable blades of the rotor. However, as the blades might be orientable the lifting force vector is orientable as well. In this case the geometric orientation of the rotor might remain constant, but the lifting force vector will change. Therefore the orientation of means for propulsion can be advantageously defined by the orientation of the lifting force vector. It is noted that a change of sign of the lifting force vector is to be neglected. The orientation of the means for propulsion is then given by the absolute values of the lifting force vector. Also a rotation of more then 180° during operation around the pitch axis of any propulsion module or means for propulsion is not considered to be within the scope of the invention, as this would lead to the above mentioned drawbacks for the UV.

In regular flight or dive mode the orientation of the means for propulsion particularly remains within a half-space limited by the plane extending between pitch and roll axis of the UV, i.e. the means for propulsion or the propulsion modules particularly do not flip their orientation by more than 180°, for example from pointing upwards to pointing downwards. Thus, the orientation of the means for propulsion is pointing preferably always inwards (or always outwards, depending of the direction of the orientation) of the half-space during flight. If the UV is an ROV, it is however possible that the means for propulsion are used similarly to VTOLs, i.e. for lifting the ROV the means for propulsion will be oriented such that they point towards/upwards said half-space, wherein when moving the ROV laterally, the means for propulsion are mainly oriented along the roll-axis, i.e. the orientation of the means for propulsion points well along the plane limiting the half-space. It is even possible that in some instances the orientation of the means for propulsion does not point towards/inwards said half-space but outwards, in case a diving motion combined with a lateral motion is intended. Nonetheless, the basic concept, namely being able to rotate the body independently of the orientation of the propulsion modules is always maintained.

In contrast to conventional UAVs or ROVs, the UV according to the invention allows for free rotation of the body around the pitch axis during flight or diving operation, particularly without altering the orientation of the means for propulsion.

In contrast to VTOLs, the UV according to the invention is designed such that flight or diving stability/performance is not altered or influenced by the specific orientation of the body with respect to the pitch axis.

In embodiments that comprise not more than two propulsion modules, the moment of inertia of the body around the pitch axis is significantly reduced compared to UAVs or ROVs that comprise more than two propulsion modules, if at least one propulsion module is not arrange along the pitch axis. When adding more than two propulsion modules to the body along a direction different than the pitch axis the moment of inertia of the body along the pitch axis is increased. These additional propulsion modules might even be a hindrance when considering multiple rotations or even only half a rotation of the body around the pitch axis, as the additional means for propulsion will change orientation just because of the altered orientation of the body and not necessarily because of a flight manoeuvre (for example left, right, up, down, rotate left, rotate right). Furthermore, the means for propulsion of the additional propulsion module will need to adapt thrust vectors for the altered orientation in order to guarantee flight or dive stability.

The UV according to the invention solves this problem. If the UV is particularly a UAV, said UAV is designed to preferably not fly in fixed-wing mode. However it is conceivable that the means for propulsion and the propulsion modules are designed such, that the UV according to the invention is capable of flying in fixed-wing mode.

As mentioned above, tiltrotors and tiltwings are also capable of rotating their rotors and wings around the pitch axis, however in contrast to the invention the body of these aircrafts is not designed to adopt an independent orientation/position with respect to the pitch axis during flight.

Furthermore, these aircrafts mainly rely on fixed-wing flight mode during regular flight and for example only switch to rotary-wing mode during vertical take-off.

One advantage of the UV according to the invention is that the field of view of an acquisition system, for example a camera system, or a projection system that is arranged on the body, will not the obstructed by a propulsion module or a means for propulsion, as the whole body can adopt any orientation with respect to the pitch axis without interfering with flight stability.

This stands in stark contrast to conventional multicopters that carry the acquisition system or projection system usually below or above the body that is not freely rotatable around the pitch axis during flight, at least not without altering the orientation of the propulsion modules or means for propulsion.

In contrast to the aircraft disclosed in RU 0002547950 the UV according to the invention all propulsion modules are linked to the body along the pitch axis. The advantage of said configuration has been elaborated above.

Another advantage over the aircraft disclosed in RU 0002547950 is that during flight or diving operation of the UV the orientation of the propulsion modules and thus the means for propulsion with respect to the environment can remain unaltered while nonetheless a rotation of the body around the pitch axis is achievable. Furthermore, the thrust and lifting force vector of each means for propulsion does not need to be altered (or only marginally to maintain exact position) when rotating the body around the pitch axis under ideal conditions.

Also control mechanisms and control algorithms for a UV according to the invention particularly control algorithms for the means for propulsion, are much less demanding compared to control algorithms and control mechanisms for a quadrocopter disclosed by RU 0002547950. This is due to the fact that according to the invention at no time during flight and independent of the orientation/motion of the body with respect to the pitch axis the means of propulsion need to change from pulling to pushing mode, i.e. flipping the thrust vector. Flipping the thrust vector during flight/diving operation is a problematic and potentially destabilizing manoeuvre and often leads to decreased flight stability. Thrust reversal in aviation is to be avoided during regular flight - at least to reduce the wear and tear of the means for propulsion. The UV according to the invention does not have such problems by design.

Another advantage of the UV according to the invention is that the UV is capable of performing high agility manoeuvres during flight due to the fact that in some embodiments the propulsion modules can adopt different orientations with respect to the pitch axis. For example by orienting each propulsion module and/or the means for propulsion from each propulsion module at a different angle with respect to the pitch axis, the UV is capable of fast rotation around the yaw axis. But not only fast rotation around the yaw axis can be achieved but also it is possible to accelerate or decelerate the UV along the roll direction by tilting the propulsion module and/or the means for propulsion around the pitch axis.

The UV according to the invention is particularly not limited to a rotation of the propulsion modules only around the pitch axis, but also motions of the propulsion modules, such as for example rotations, sheer movements and/or translations along other directions are conceived with the UV according to the invention.

According to another embodiment of the invention the UV, particularly the UAV, is a multicopter comprising at least three rotors, particularly very each propulsion module comprises at least one rotor, particularly two, three, four or more rotors.

This embodiment particularly comprises UAVs such as quadrocopters, particularly comprising four rotors arranged in H-configuration. But also hexacopters, octocopters or multicopters with even more rotors are comprised in this embodiment as long as the means for propulsion are arranged on the propulsion modules.

If the UV is an ROV, it is preferred that the rotors are propellers or impellers.

Throughout the document, when referring to rotors, also propellers are thought to be summarised under the notion of a rotor when applicable. The rotor is particularly a part of a means for propulsion, wherein the rotor can be used for pushing or pulling the UV. Also means for propulsion are conceived that comprise two rotors, wherein particularly one rotor is driven in pulling mode and the other rotor is driven in pushing mode, wherein particularly one rotor is pointing upwards and the other orders pointing downwards.

In a preferred embodiment each propulsion module comprises the same number of means for propulsion and particularly the same number of rotors.

According to another embodiment of the invention each means for propulsion comprises one rotor.

According to another embodiment of the invention the UV, particularly the UAV, is designed to fly or dive in rotary-wing mode, and particularly wherein the UV is designed to fly or dive only in rotary-wing mode.

Flying or diving only in rotary-wing mode allows for hovering and is advantageous with respect to tiltwings or tiltrotors, as the layout and design of the UV is much less complex, because there is no transition from rotary-wing mode to fixed-wing mode.

If the UV is an ROV, fixed-wing mode would correspond to a diving mode that is characterised in that lift or buoyancy is achieved by a lateral motion of the ROV, wherein part of the propulsion along lateral direction is used for lift, analogous to a submarine.

In contrast to fixed-wing mode, the rotary-wing mode of an ROV can be defined analogously to rotary-wing mode in aviation.

According to another embodiment of the invention, during flight or during diving operation the body is rotatable more than 90°, particularly more than 180°, more particularly at least 360° along the pitch axis with respect to the propulsion modules.

This embodiment particularly covers also rotations of more then 360° around the pitch axis. A rotation of the body around the pitch axis of more than 90° up and/or down, is advantageous as an acquisition system and/or a projection system can be pivoted to acquire or project along a larger dihedral angle that is unobstructed by the body or the propulsion modules.

Particularly a body that is rotatable at least 360° or more around the pitch axis is advantageous, as such an UV is capable of acquiring or projecting with the corresponding acquisition or projecting system a full panoramic sector (i.e. a dihedral angle) around the pitch axis.

According to another embodiment of the invention, the body comprises and/or is a gimbal, wherein the gimbal allows for the rotation along one, two or three independent axes in or of the body.

The gimbal might comprise active or passive control elements regarding its position with regard to a reference position. Active control might be achieved with electric or electronic components. Furthermore the gimbal particularly comprises components that are suited for damping or cancelling vibrations stemming from the propulsion modules, means for propulsion or other components that give rise to vibrations.

The use of the gimbal is advantageous for keeping an acquisition or a projection system arranged at the body stably oriented while the UV position changes, particularly due to turbulences or other external factors that have to be compensated by the UV in order to maintain its position or line of flight.

However, it is noted that one particular advantage of the UV according to the invention is, that the body itself can act as a gimbal at least for the pitch axis, as the body is rotatable around the pitch axis without altering the orientation of the propulsion modules - this embodiment is particularly weight saving. Thus, it is possible to arrange a gimbal at the body, while the body itself is a gimbal as well, so that particularly two gimbals cooperate during operation.

According to another embodiment of the invention, each propulsion module comprises an energy source, such as for example a battery, an accumulator capacitor, or a fuel cell, or wherein the energy source is arranged at the body.

If the energy source is comprised or arranged at the propulsion module, the body of the UV will be lighter and thus the moment of inertia of the body is greatly reduced, weights is advantageous for rotating the body with as little energy as possible.

If the energy source is arranged or comprised by the body, the moments of inertia of the propulsion modules are reduced, granting higher agility during flight or diving operation respectively. It is within the meaning of this embodiment that for example each propulsion module comprises its own energy source.

According to another embodiment of the invention, each propulsion module is linked to the body with a joint, wherein each joint allows for rotation at least or only around the pitch axis of the UV, wherein each propulsion module is arranged with the first end of the propulsion module at the respective joint, particularly wherein each propulsion module bifurcates or branches out in at least two branches or a plurality of branches, particularly wherein each branch comprises a means for propulsion.

A joint can be a device that is suited for granting rotation/pivoting/turning around at least said pitch axis. Particularly a ball joint is a suitable joint. Furthermore also a device or a component that allows for additional motions, such as shifting, sheering or the like, is considered a joint in this regard.

According to another embodiment of the invention, the body comprises or is an acquisition system, a measurement system, a weapon system and/or a projection system, particularly a camera system, for example a 3-D camera system, wherein the acquisition system and/or the projection system is particularly mounted on the gimbal.

Also paint guns or systems firing or shooting projectiles might be comprised by the body or the gimbal as well. An acquisition system or a projection system can comprise an illumination system, a radar, a camera, particularly an optical camera or a heat sensing camera, and/or an ultrasound device.

Also radiation detectors, laser-based distance measurement systems, such as LIDAR and the like might be comprised in the body or the gimbal of the UV.

According to another embodiment of the invention, the propulsion modules comprise an optical flow sensor, wherein said optical flow sensor is arranged such that the propulsion modules that is capable of measuring the optical flow below or in front of the UV.

In order to achieve a constant orientation towards the ground, it might be advantageous to provide optical flow sensor with a gimbal, as the orientation of the propulsion modules might vary during flight.

According to another embodiment of the invention, the UV comprises an ultrasound positioning system and/or an ultrasound-based distance measurement system that is suited for estimating a distance to the ground based on ultrasound signals.

According to another embodiment of the invention, the UV comprises an optical system for estimating a three-dimensional environment in the vicinity of the UV.

According to another embodiment of the invention, the UV comprises a positioning system, particularly a satellite navigation system, wherein the navigation system particularly comprises a GPS, a GLONASS, BeiDou, or a Galileo module, that is capable of estimating the UVs position based on the signals of the positioning system.

Furthermore, the positioning system might comprise components that are designed for estimating the position based on a local positioning system.

According to another embodiment of the invention, the measurement system, the acquisition system and/or the projection system is an optical system, particularly a lens-based system, wherein the measurement system, the acquisition system and/or the projection system is arranged such that the body, that if the measurement system, the acquisition system and/or the projection system is rotated, particularly around the pitch axis, the nodal point or the centre of the entrance pupil of the measurement system, the acquisition system and/or the projection system is located on the axis of rotation particularly on the pitch axis.

Such an arrangement of the measurement system, the acquisition system and/or projection system allows for panoramic photography or panoramic projections that avoid the so-called parallax error.

Data, particularly images, that are acquired at various angles of the acquisition system can be merged to a single panoramic image with minimal or no parallax error, if the acquisition systems nodal point or entrance pupil is located on or close to the pitch axis, or the respective axis of rotation.

It is noted that nodal point and entrance pupil are referred to synonymously in this application. Even though these two planes / points are not necessarily identical, in literature it is commonly referred to the nodal point when discussing parallax error-free image-merging, despite the fact that it is the entrance pupil of the imaging system that has to be on the axis of rotation in order to achieve such error-free imaging.

According to another embodiment of the invention, each propulsion module is pivotable with respect to the body along a roll and/or a yaw axis of the UV, particularly wherein each propulsion module is designed to pivot around said axis depending on the orientation of the body with respect to the pitch axis, particularly such that each propulsion module is outside the field of view of the measurement system, the acquisition system and/or the projection system.

This embodiment is particularly advantageous, as more degrees of freedom for the motion of the propulsion module are added. More degrees of freedom allow for more flexible control mechanisms of the UV.

Pivotable propulsion modules allow for the positioning of the propulsion modules relative to the body in a manner that independent of the orientation of the body, the measurement system, the acquisition and/or projection system, the field of view remains unobstructed by the propulsion modules.

According to another embodiment of the invention, the body comprises two or more subunits that are rotatably and/or pivotably connected to each other, such that particularly each subunit is independently rotatable or pivotable to each other, wherein the axis of rotation of said connection is particularly the pitch axis, wherein particularly each subunit comprises a gimbal.

An advantage of this embodiment is that for example one subunit might comprise and acquisition system and another subunit might comprise a projection system that are orientable independently of each other.

It is also conceivable that each subunit carries an acquisition system, wherein the acquisition systems cooperate such that 3-D images can be acquired. As for such a 3-D acquisition system it might be desirable to adjust the angle particularly the parallax of the 3-D optical system, this embodiment is of great advantage, as the two or more subunits can be oriented independently of each other.

According to another embodiment of the invention, the body particularly each of the subunits, and/or each propulsion module (both or just one) comprise least one device to estimate the individual position or orientation relative to the ground, to the gravitational force, relative to some initial orientation, and/or relative to the propulsion modules, wherein said device particularly comprises a gyroscope, a magnetometer and/or an accelerometer, so that a virtual centre can be estimated to which the entire UV and/or the body is oriented or stabilized.

It is also possible that the initial orientation refers to a common particularly virtual frame of the UV that serves as a fixed frame system for the propulsion modules and the body.

According to another embodiment of the invention, each propulsion module comprises at least one sliding contact, particularly two sliding contacts, for unhindered rotation of the respective propulsion module with respect to the body where the propulsion module is linked to the body, wherein the at least one sliding contact of the respective propulsion module is designed for transmitting electric energy and/or data to and/or from the body.

This embodiment is particularly advantageous, as the sliding contacts can be used for infinite rotation, such that the body can rotate many rounds along one direction without the need of a reset manoeuvre that aims to disentangle wires and cables reaching from the propulsion module to the body.

According to another embodiment of the invention, the body comprises a landing gear, wherein the landing gear is particularly designed to adopt a landing position for take-off and landing, and a flying position, wherein the landing gear is arranged such at the body that the landing gear extends beyond a field of view of the measurement system, the acquisition system and/or the projection system comprised by the body, particularly a camera system or a camera, particularly when the landing gear is in its flying position and particularly wherein the landing gear is extending away from a a side or a backside of the measurement system, the acquisition system and/or the projection system.

According to another embodiment of the invention, the propulsion modules are fixedly oriented to each other, that is they cannot be rotated independently of each other, along the pitch axis, wherein the propulsion modules are particularly connected by a common axis or gearing mechanism.

This embodiment maintains the full rotational freedom of the body around the pitch axis, but couples the orientation of the propulsion modules to each other. This might lead to an increased flight stability and a less complex flight behaviour. This embodiment is for flying or diving is particularly advantageous for computationally lighter algorithms. Furthermore a UV with fixedly oriented propulsion modules has less demands regarding the on board electronics and measurement devices, such as for example gyroscopes and can therefore be lighter and have thus an extended operating time.

The problem according to the invention is furthermore solved by a method for rotating the UV according to one of the embodiments above, around a yaw axis of the UV, comprising at least the steps of:
- particularly taking-off with the UV,
- turning or tilting the propulsion modules with respect to each other around the pitch axis of the UV, such that the respective propulsion module, particularly the means for propulsion, arranged on the respective propulsion module, more particularly the resulting lifting force and/or the thrust vector of the propulsion module, enclose an angle with the plane orthogonal to the roll axis wherein the speed of rotation of the UV around the yaw axis is increasable by increasing the enclosed angle, wherein particularly the orientation of the two propulsion modules is pointing towards are away form each other.

Taking-off, is any process that leads the UAV to be airborne or the ROV to be waterborne respectively.

This method allows for rapid rotation around the yaw axis of the UV, which is advantageous for fast manoeuvres.

The speed of rotation can be increased even more by simultaneously combine the method according to the invention, with the common mechanism of achieving a rotation around the yaw axis.

This common mechanism is described in the following embodiment.

According to another embodiment of the invention, the lifting force and thrust vectors, particularly the lifting force and thrust vectors of the rotors, of the first and second propulsion module are adjusted such that a rotation around the yaw axis would be achieved even if the angle between the first and second propulsion module would be zero.

For multicopters such turning is achieved by adjusting the rotor speeds individually.

The problem according to the invention is also solved with a method for acquiring data of a large panoramic sector or projecting light, sound, particularly ultrasound, or radiation within the large panoramic sector, along a plane extending orthogonal to the pitch axis of a UV with a UV according to the invention, by particularly stepwise rotating the body comprising a measurement system, an acquisition and/or a projection system from a first position to a second position around the pitch axis of the UV, wherein the panoramic sector covers an angle of particularly more than 180° within said plane.

The size of the panoramic sector is particularly given by the solid angle that is covered by the rotation of the respective system around the pitch axis.

With the method according to the invention it is therefore possible to acquire a 360° view, i.e. a full sphere of the surrounding of the UV, by using an appropriate lens system that covers particularly more than 180° along the pitch axis and by rotating the system around the pitch axis as described by the method according to the invention.

Such a full panoramic sector can be acquired comparably rapidly as the UV itself has not to move, but solely the body of the UV.

Depending on the lens system of the respective measurement system, acquisition and/or projection system, also a stepwise or continuous rotation around the yaw axis of the UV is conceivable in order to cover arbitrary solid angles.

It is therefore conceivable that a laser scanning system arranged on the body of the UV is rotated so fast that for the human eye a continuous impression is achieved.

Furthermore a use of an UV according to the invention is disclosed, wherein the UV is used for acquiring or projecting a panoramic sector, particularly a solid angle, by performing the method according to the invention for acquiring or projecting a panoramic sector.

Further features and advantages of the invention shall be described by means of a detailed description of embodiments with reference to the Figures, wherein it is shown in
- Fig. 1: a perspective view of an UAV according to the invention;
- Fig. 2: a schematic top view/section of an UAV according to the invention;
- Fig. 3: a series of perspective views of an UAV according to the invention;
- Fig. 4: a perspective view of an UAV comprising two subunits;
- Fig. 5: a front view of an UAV with only one propulsion module;
- Fig. 6: a top view of an UAV with only one propulsion module;
- Fig. 7: a top views of several states of an UAV with pivotable propulsion modules;
- Fig. 8: a top view of an UAV with propulsion modules linked by a ball joint;
- Fig. 9: a front view of an UAV with arms rigidly attached to the body;
- Fig. 10: a front view of an UAV with arms rigidly attached to the body;
- Fig. 11: schematic view of an UAV according to the invention with two rotors attached to each means for propulsion;
- Fig. 12: schematic view of an UAV according to the invention with a propulsion module comprising three means for propulsion;
- Fig. 13: a front view of an UAV with a body that is rotatable around three axes; and
- Fig. 14: schematic drawing of acquiring a panoramic sector;

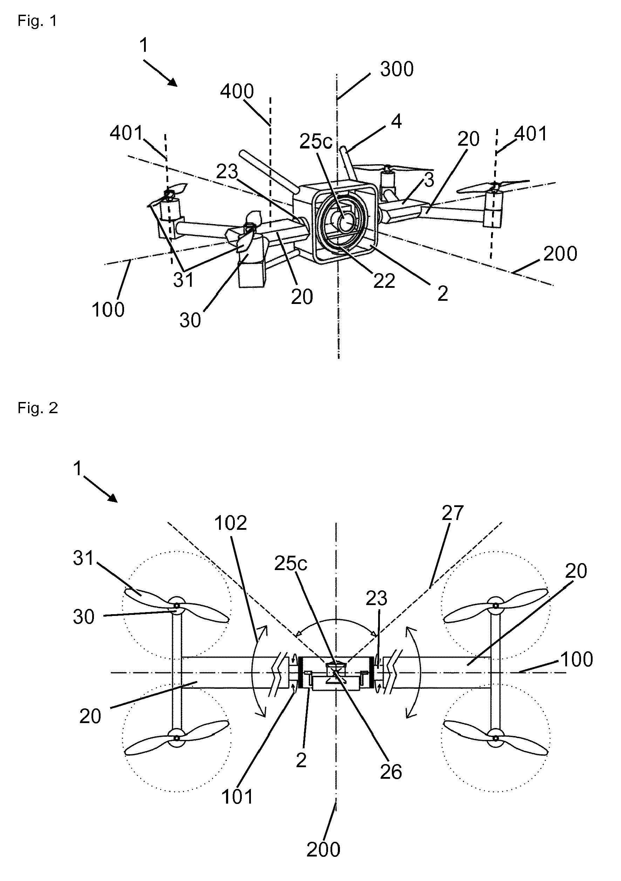

In Figure 1 a schematic view of an unmanned aerial vehicle (UAV) 1 according to the invention is shown. The UAV 1 comprises a body 2 that is arranged between two propulsion modules 20. The propulsions modules 20 each comprise a y-shaped arm that is rotatably linked with one end to the body 2 by means of a joint 23.

The other ends of the propulsion module 20 each comprise a means for propulsion 30, in this example a motor with a rotor 31.

The two propulsion modules 20 and the body 2 are arranged along the pitch axis 100 of the UAV 1. The propulsion modules 20 each are rotatable around the pitch axis 100. The same applies for the body 2.

During flight the body 2 is freely rotatable around the pitch axis 100 without influencing the line of flight. For controlling the UAV 1, the propulsion modules 20 can be pivoted independently of each other around the pitch axis 100 as well, so that each component, namely the two propulsion modules 20 and the body 2 is independently orientable of each other with respect to the pitch axis 100.

While the line of flight of the UAV 1 can be controlled at least to some extend by tilting the propulsion modules 20 with around to the pitch axis 100, it is also possible to control the direction of flight of the UAV 1 by adjusting the lifting force vectors and/or the thrust vectors of each means for propulsion 30 accordingly. How the lifting force vectors and/or the thrust vectors of each means of propulsion 30 have to be adjusted, is well known from the state-of-the-art.

Orthogonal to the pitch axis 100 there are the roll axis 200 and the yaw axis 300. These three axes provide a coordinate system that is linked to the UAV 1. This means that if the orientation of the UAV 1 changes with respect to the ground, the coordinate system consisting of the pitch axis 100, the roll axis 200 and the yaw axis 300 changes its orientation correspondingly.

In fixed-wing aircrafts the roll axis 200 typically points in the direction of the line of flight, wherein the wings are oriented along the pitch axis 100.

It is noted, that the coordinate system linked to the UAV 1 consisting of the pitch axis, 100 the roll axis 200, and the yaw axis 300 is not attached to the orientation of the body 2. While all three components, namely the two propulsion modules 20 and the body 2 are free to rotate around the pitch axis 100 during flight, the orientation 401 of the means for propulsion 30 and thus also the orientation 400 of each propulsion module 20 is thought to be kept within a half-space, that extends from a plane extending between the roll axis 200 and the pitch axis 100 either below or above this plane. It is noted that in all embodiments shown the orientation 400 of the propulsion modules 20 and the orientation 401 of the means for propulsion 300 are identical.

This means that during regular flight, the orientation 401 of the means for propulsion 30 and thus the propulsion modules 20 do not flip, i.e. they do not change their orientation 400, 401 from pointing substantially upwards to substantially downwards.

The orientation 400 of the propulsion module 20 can be for example defined by the pointing direction of the means for propulsion 30 (here substantially along the yaw axis 300). The half-space according to this example therefore extends upwards along the yaw axis 300. During flight the orientation 401 of the means for propulsion 30 might vary, but it will point in a direction that points always inward or always outward said half-space.

In the example shown in Fig. 1 the rotors 31 of the means for propulsion 30 will be driven always in a lifting mode that is based on pulling the UAV 1 rather than pushing the UAV 1 in order to keep the UAV 1 aloft. An UAV 1 flying employing a pushing configuration is also conceivable by arranging the means for propulsion 30 such that they point in the opposite direction during flight (not shown). The corresponding half-space would therefore extend substantially downward from the UAVs 1 coordinate system. Also a combination of pushing and pulling configuration is conceivable. For example by means for propulsion 30 that each comprises two rotors 31, wherein one rotor 31 is working in pulling configuration and the other (pointing downwards) is driven in pushing configuration.

Alternatively it is possible to orient one of the two propulsion modules 20 pointing (i.e. with its orientation) substantially downwards and the other propulsion module 20 pointing substantially upwards with its means for propulsion 30.

However it is not thought that a specific means for propulsion 30 is changing from a pulling configuration to a pushing configuration or vice versa during flight, even though it might become necessary in an emergency manoeuvre that might be caused by strong winds or other extreme conditions.

In the example of Fig. 1 the body 2 comprises a gimbal 22 that comprises a camera 25c. The body 2 itself is the frame that is designed to comprise the gimbal 22. The gimbal 22 is designed to pivot the camera 25c around the yaw axis 300, the roll axis 200 and the pitch axis 100. This allows for keeping the camera 25c in a fixed orientation relative to the ground during flight.

By rotating the body 2 around the pitch axis 100 the camera 25c will point along another direction. This way it is possible to acquire images along 360° without the camera 25c ever recording the means for propulsion 30 or the body 2.

A landing gear 4 with four legs is arranged at the body 2 such that it extends outside the field of view of the camera 25c.

Fig. 2 shows a top view of an UAV 1 according to the invention, wherein the body 2 is shown as a section for illustrative reasons.

The UAV 1 comprises two propulsion modules 20 wherein each propulsion module 20 is T-shaped and comprise two means for propulsion 30 with a rotor 31 each. As in Fig. 1, each propulsion module 20 is rotatably 101 connected with a joint 23 to the body 2 that is arranged between the two propulsion modules 20. The body 2 and the two propulsion modules 20 extend along the pitch axis 100 of the UAV.

The entrance pupil 26 or nodal point of the camera 25c is arranged on the pitch axis 100. This allows for precise reconstruction of panoramic images that have been acquired by a rotation of the body 2 around the pitch axis 100. Furthermore the camera's 25c entrance pupil 26 is arranged also on the intersection of the roll axis 200 and yaw axis 300 (not shown), such that independent of the rotation of the body 2 or the UAV 1 around one of these axes, no parallax error will be present in the different images.

Furthermore, the UAV 1 as a whole is capable of tilting around the pitch axis 100, which is indicated by the arrows 102.

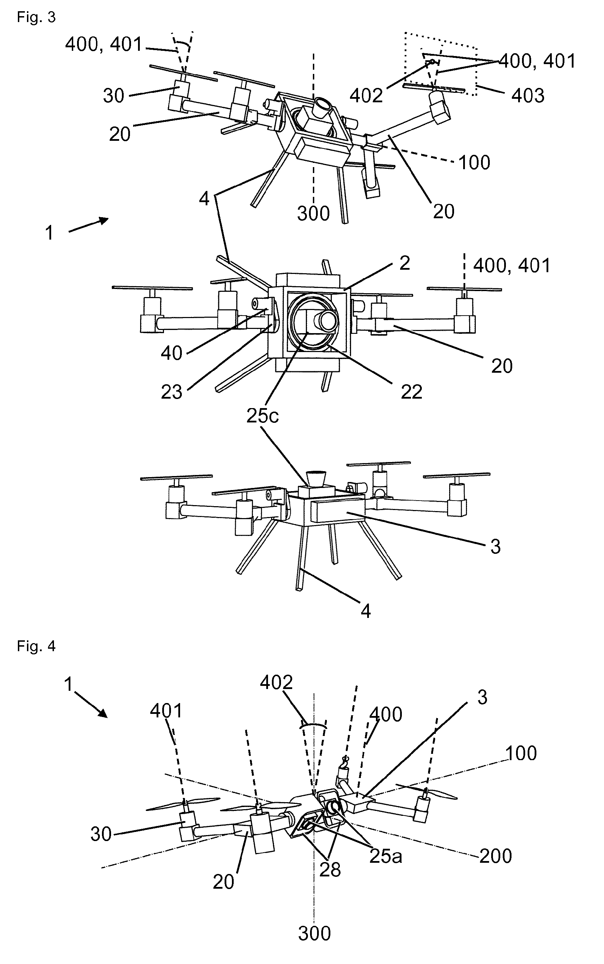

Fig. 3 shows a UAV 1 according to the invention during flight adopting various positions regarding the two propulsion modules 20 and the body 2. When in landing position, the landing gear 4 that is arranged at the body 2 is pointing directly downwards (see lowest panel of Fig. 3). In this example of the UAV 1, batteries or other energy sources 3 are arranged on the body 2 of the UAV 1. The orientation 400 of the two propulsion modules 20 relative to the body 2 is controlled by motors 40. The camera 25c is held in a gimbal 22 that stabilizes the orientation of the camera 25c during flight.

It is noted that the orientation 400 of the propulsion modules 20 in Fig. 3, top panel, corresponds to a configuration of the UAV 1 that will yield a rapid turning around the yaw axis 300 according the method according to the invention. As indicated by the dashed arrows the orientation 400 of the propulsion modules 20 with respect to the plane 403 extending between the pitch 100 and yaw axis 300 is such that the propulsion modules 20 enclose an angle 402 with said plane 403 (dashed square). In the drawing the orientation 400 / 401 of two propulsion modules 20 is indicated at each selected means for propulsion 30 simultaneously for reasons of clarity.

Fig. 4 shows an embodiment of an UAV 1 according to the invention that comprises a body 2 consisting of two subunits 28. Each subunit 28 is rotatable around the pitch axis 100. The two propulsion modules 20 each are linked to one of the subunits 28.

The UAV 1 comprises now four components that are arranged along the pitch axis 100, namely the two propulsion modules 20 and the two subunits 28, wherein each component is independently rotatable around the pitch axis 100.

This embodiment is particularly advantageous as each subunit 28 is designed to comprise a payload such as for example an acquisition system 25a, a projection system, a weapon system or any kind of measurement system.

The UAV 1 shown in Fig. 4 comprises its energy source 3 in form of batteries or accumulators in the two y-shaped propulsion modules 20.

As in Fig. 3 the orientation of the propulsion modules 20 in Fig. 4 is such that a rapid turning around the yaw axis 300 can be achieved according to the invention.

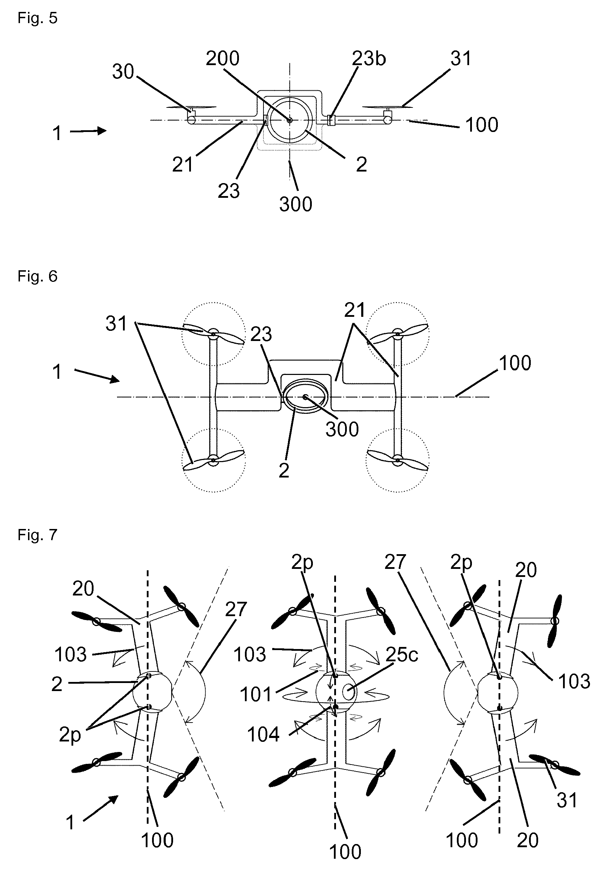

Fig. 5 shows an UAV 1 according to the invention that comprises only one propulsion module 21 wherein the propulsion module 21 is linked to the body 2 of the UAV 1 with only one joint 23. The propulsion module 21 extends beyond the body 2 and comprises four means for propulsion 30 (only two are visible). A second joint 23b that is comprised by the propulsion module 21 enables the two arms of the propulsion module 21 to rotate independently of each other around the pitch axis 100.

Fig. 6 shows an embodiment of an UAV 1 according to the invention that also comprises only one propulsion module 21 that comprises four means for propulsion 30. The propulsion module 21 is linked rotatably to the body 2 with a joint 23.

The propulsion module 21 extends around the body 2 in a symmetrical fashion, wherein the orientation 401 of all four means for propulsion 30 are fixedly oriented to each other, that is the two T-shaped arms of the one propulsion module 21 are fixedly oriented to each other and cannot be tilted with respect to each other.

Only the orientation of the body 2 with respect to the propulsion module 21 can be altered by rotating the body 2 around the pitch axis 100.

Fig. 7 shows a quadrocopter according to the invention that comprises two propulsion modules 20 and a body 2 wherein the propulsion modules 20 are also pivotable 103 around the yaw axis 300 (pointing out of the drawing-plane) of the UAV 1. The body 2 comprises a measurement system, an acquisition system 25a or a projection system with a predefined field of view 27 given by the aperture of the system (indicated by the dashed lines). The two propulsion modules 20 can be pivoted 103 around the yaw axis 300 in such a manner that independent of the orientation of the body 2 and thus the measurement system, the acquisition and/or the projection system, the field of view 27 remains unobstructed by the rotors 31 of the means for propulsion 30. The pivoting motion around the yaw axis 300, the rotation of the body 2 as well as the rotation 101 of the propulsion modules 20 around the pitch axis 100 are indicated by arrows.

In a variant of this embodiment the two propulsion modules 20 are also pivotable 104 around the roll axis 200 of the UAV 1 such that if the acquisition system 25a or the projection system point upwards or downwards, the two propulsion modules 20 can be pivoted 104 around the roll axis 200 such that the field of view 27 of the acquisition system 25a or the projection system remains unobstructed by the rotors 31. This is advantageous, as depending on the orientation of the camera or acquisition system that is comprised in the body 2, the rotors 31 arranged on the means for propulsion 30 can be kept outside the field of view 27 of the camera.

It is noted that in all embodiments it is possible to design the arms of the propulsion modules 20 aerodynamically or hydrodynamically such that the air drag respectively the water drag is minimised.

In the embodiment of Fig. 7 the pitch axis 100 is particularly defined by the line 100 extending between the pivoting points 2p of the two propulsion modules 20. This definition of the pitch axis 100 can be applied to all embodiments of UVs according to the invention that comprise two propulsion modules 20 that have their pivoting point 2p on the body 2.

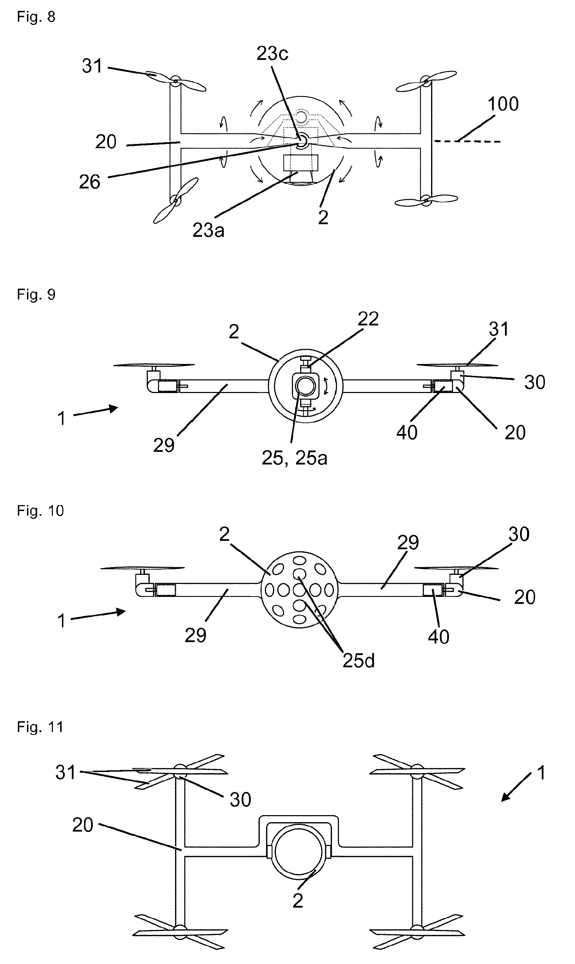

Fig. 8 shows an embodiment of the invention that comprises two propulsion modules 20 that are linked together with a ball joint 23c, wherein the body 2 of the UAV is arranged around said ball joint 23c. The body 2 is rotatable with respect to the to propulsion modules 20 and the two propulsion modules 20 are rotatable with respect to each other by the ball joint 23c. The ball joint 23c connecting the two propulsion modules 20 allows pivoting the propulsion modules 20 around the yaw axis 300 and the roll axis 200. Furthermore a rotation around the pitch axis 100 is also facilitated by the ball joint 23c.

As indicated by the dotted lines an alternative embodiment of the UAV 1 allows for the arrangement of the projecting or acquisition system 25a with its entrance pupil 26 at the pitch axis 100. For that reason the two propulsion modules 20 and the ball joint 23c are arranged off-centre with regard to the pitch axis 100.

Fig. 9 shows an embodiment of the invention where the body 2 of the UAV 1 comprises arms 29 and wherein the propulsion modules 20 are comparably short with respect to the arms 29.

The two propulsion modules 20 are arranged at the end of the arms 29 of the body 2 such that the body 2 (with the two arms 29) is rotatable with respect to the two propulsion modules 20.

A motor 40 for controlling the relative position of the two propulsion modules 20 with respect to the body 2 can be either arranged in the body 2 (see e.g. Fig. 10) or in the respective propulsion module 20 as indicated in Fig 9. The body 2 itself in Fig. 9 can be understood as a gimbal 22 that allows for rotation along all three axes.

Fig. 10 shows an embodiment of the invention where the body 2 comprises a plurality of measurement systems 25d, acquisition and/or projection systems that allow for simultaneous measurement, acquisition or projection along a plurality of directions. Also in this embodiment the body 2 comprises two arms 29, wherein the propulsion modules 20 are comparably short with respect to the arms 29.

Here, the arms 29 comprise motors 40 to adjust the orientation of the propulsion modules 20 with respect to the body 2 and to rotate the body 2 around the pitch axis 100.

Fig. 11 shows an embodiment of the UV according to the invention where the means for propulsion 30 each comprises two rotors 31, wherein one rotor 31 is pointing upwards and the other rotor 31 is pointing downwards. The orientation of the propulsion module 20 is particularly given by the direction of the axis of rotation 50 of the two rotors 31. For rotor-based or propeller-based UVs, the orientation of the propulsion module 20 can always be defined along the direction of the axis of rotation 50 of the rotors 31, as has been described above. This definition is particularly useful for UVs that have rotors 31 with a fixed geometry, i.e. with fixedly oriented blades.

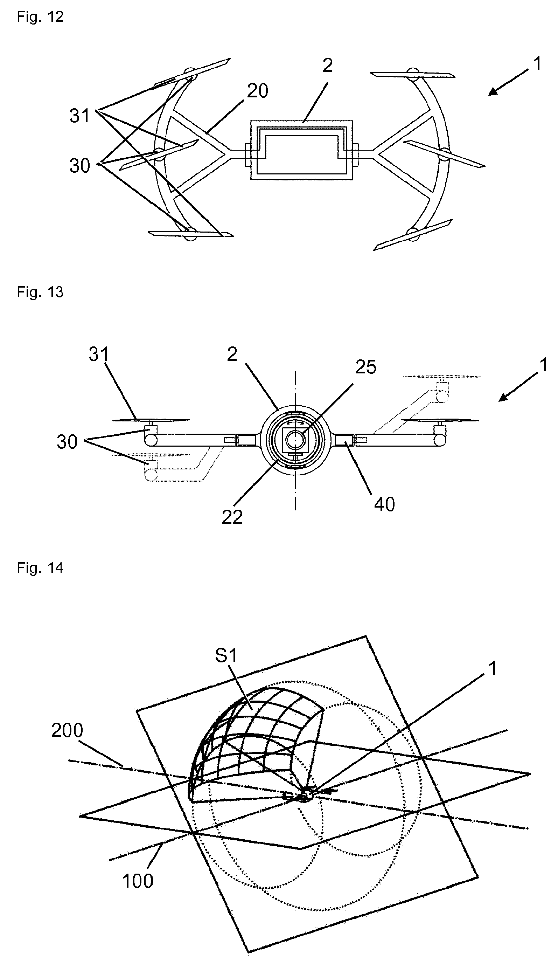

Fig. 12 shows an embodiment of the invention comprising three means for propulsion 30 with a rotor 31 each. The energy sources 3 are arranged on the bifurcated arms of the propulsion module 20. It can be seen how the propulsion modules 20 are linked within the body 2 such that they are not pivotable against each other.

Fig. 13 shows an embodiment of the invention, where the two propulsion modules 20 each have a bifurcated arm with a means for propulsion 30 each, wherein the arms are extending below and above the plane between the roll axis 200 and pitch axis 100.

Fig. 14 shows how the method according to the invention for acquiring a panoramic sector is executed with a UV according to the invention.

A first image in a first orientation of the body that is rotatable around the pitch axis is acquired by a camera system (indicated by the solid angle referred to as "S1 "). Subsequently, the body is rotated about a predefined angle, such that the camera system points in a different solid (not shown) direction. A second image is acquired. These two images can be merged to one panoramic image that is devoid of parallax errors, if the camera systems entrance pupil is located on the pitch axis.

It is also possible to continuously rotate the body and continuously acquire images for various positions of the body or to equip the body with a plurality of measurement systems, projection systems, or acquisition systems such as cameras that point in different directions. The latter configuration particularly allows for the acquisition of 360° (full sphere) videos or images.

Additionally it is possible to rotate the UAV according to the invention also around the yaw axis, such that in combination a full 360° sphere can be measured/recorded/illuminated (not shown).

## Claims

1. Unmanned aerial or submarine vehicle (UV) (1) comprising at least:
- at least one, particularly not more than two, particularly exactly two propulsion modules (20, 21), each comprising means for propulsion (30) of the UV (1),
- a body (2),
- wherein the propulsion modules (20,21) are linked with the body (2) such that each of the propulsion modules (20, 21) is rotatable (101) with respect to the body (2) at least around a pitch axis (100) of the UV (1),
**characterized in that**
the UV (1) is designed such, that the body (2) is rotatable (101) around the pitch axis (100) independently of the orientation of the means for propulsion (30).

2. UV according to claim 1, **characterized in that** the UV (1) is a multicopter comprising at least three rotors (31), particularly wherein each propulsion module (20, 21) comprises at least one rotor (31), particularly two, three, four or more rotors (31).

3. UV according to one of the preceding claims, **characterized in that** the UV (1) is designed to fly in rotary-wing mode, and particularly wherein the UV is designed to fly only in rotary-wing mode.

4. UV according to one of the preceding claims, **characterized in that** the body (2) is rotatable more than 90°, particularly more than 180°, more particularly at least 360° along the pitch axis (100) with respect to the propulsion modules (20, 21).

5. UV according to one of the preceding claims, **characterized in that** the body (2) comprises or is a gimbal (22), wherein the gimbal (22) allows for the rotation along one, two or three independent axes.

6. UV according to one of the preceding claims, **characterized in that** each propulsion module (20, 21) comprises an energy source (3) for the UV (1) or wherein the energy source (3) is arranged at the body (2), or wherein the body and the propulsion modules (20, 21) each comprise an energy source.

7. UV according to one of the preceding claims, **characterized in that** each propulsion module (20, 21) is linked to the body (2) with a joint (23), wherein each joint (23) allows for rotation (101) at least around the pitch axis (100) of the UV (1), wherein each propulsion module (20, 21) is arranged with a first end of the propulsion module at the respective joint (23), particularly wherein each propulsion module (20, 21) bifurcates in at least two branches, particularly wherein each branch comprises a rotor (31).

8. UV according to one of the preceding claims, **characterized in that** the body (2) comprises or is a payload (25), particularly a measurement system, an acquisition system (25a), a projection system, and/or a weapon system, wherein the measurement system particularly comprises a camera system, wherein the payload, the acquisition system (25a) and/or the projection system is particularly mounted on the gimbal (22).

9. UV according to claim 8, wherein the payload (25), particularly the acquisition system and/or the projection system, is an optical system, wherein payload (25), particularly the acquisition system (25a) and/or the projection system is arranged such at the body (2), that if the payload (25), particularly the acquisition system and/or the projection system is rotated, particularly around the pitch axis (100), the nodal point or the entrance pupil (26) of the payload (25), particularly the acquisition system (25a) and/or the projection system is located on the axis of rotation, particularly on the pitch axis (100).

10. UV according to one of the preceding claims, **characterized in that** each propulsion module (20, 21) is pivotable (103, 104) with respect to the body (2) along a roll axis (200) and/or a yaw axis (300) of the UV (1), particularly wherein each propulsion module (20, 21) is designed to pivot around said axes (100, 200, 300) depending on the orientation of the body (2), particularly such that each propulsion module (20, 21) is outside the field of view (27) of the acquisition system (25a) and/or the projection system.

11. UV according to one of the preceding claims, **characterized in that** the body (2) comprises two or more subunits (28) that are rotatably and/or pivotably connected to each other, wherein the axis of rotation of said connection is particularly the pitch axis (100), wherein particularly each subunit (28) comprises a gimbal (22).

12. UV according to one of the preceding claims, **characterized in that** the body (2), particularly each of the subunits (28), and/or each propulsion module (20, 21) comprise least one device to estimate the individual position or orientation relative to the ground and/or relative to the propulsion modules (20, 21), wherein said device particularly comprises a gyroscope, a magnetometer and/or an accelerometer.

13. UV according to one of the preceding claims, **characterized in that** the body (2) comprises a landing gear (4), wherein the landing gear (4) is particularly designed to adopt a landing position for takeoff and landing, and a flying position, wherein the landing gear (4) is arranged such at the body (2) that the landing gear (4) extends beyond a field of view (27) of the acquisition system (25a) and/or the projection system comprised by the body, particularly a camera system or a camera, particularly when the landing gear (4) is in its flying position and particularly wherein the landing gear is extending away from a side or a backside of the acquisition system (25a) and/or the projection system.

14. Method for spinning the UV (1) around a yaw axis (300) of the UV (1), according to one of the claims 1 to 13, comprising at least the steps of:
- particularly taking-off with the UV (1),
- turning the propulsion modules (20, 21) with respect to each other around the pitch axis (100) of the UV (1), such that the respective propulsion modules (20, 21) enclose an angle (402), wherein the speed of rotation of the UV (1) is increasable by increasing the enclosed angle (402).

15. Method for acquiring data along a panoramic sector or projecting light, sound or radiation within a panoramic sector along a plane extending orthogonal to the pitch axis of a UV (1) according to one of the preceding claims, by rotating, particularly stepwise rotating the body comprising a measurement system, an acquisition and/or a projection system from a first position to a second position around the pitch axis of the UV (1), wherein the panoramic sector covers an angle of particularly more than 180° within said plane.
